# EUROPÄISCHE PATENTSCHRIFT

(11) **EP 2 055 180 B1**
(45) Veröffentlichungstag und Bekanntmachung des Hinweises auf die Patenterteilung: **27.04.2011**
(21) Anmeldenummer: 08018867.5
(22) Anmeldetag: 29.10.2008
(51) Int. Cl.: A01G 3/04

(54) **Rebenvorschneider**
Vine cutter
Elément de pré-découpage de pieds de vigne

(30) Priorität: 31.10.2007 DE 102007051989
(43) Veröffentlichungstag der Anmeldung: 06.05.2009
(73) Patentinhaber: Rinklin, Willy, 79427 Eschbach (DE)
(72) Erfinder: Rinklin, Willy, 79427 Eschbach (DE)

(56) Entgegenhaltungen:
- EP-A- 0 312 126
- EP-A- 1 825 744
- DE-A1- 2 815 466
- DE-A1- 3 546 445
- DE-A1- 4 428 722
- DE-A1- 10 237 705
- FR-A- 2 752 360

## Beschreibung

Die Erfindung betrifft einen Rebenvorschneider zum Vorschnitt von Rebholz an Rebstöcken in Bogen-, Kordon- oder dergleichen Erziehung, mit einem lösbaren, an einem Trägerfahrzeug angeordneten Tragrahmen, der an seinen Enden jeweils einen verschwenkbaren Ausleger aufweist, wobei an den benachbarten freien Enden der Ausleger jeweils eine sich im wesentlichen parallel zur vertikalen Erstreckung der Rebstöcke drehbar angetriebenen Profilwelle angeordnet ist, welche mit einem mit der Profilwelle drehfest verbundenen Schneidkorb mit übereinander angeordneten, scheibenartigen Schneidwerkzeugen versehen ist.

Derartige Rebenvorschneider sind in verschiedenen Ausführungen bereits bekannt. So zeigt etwa die DE 196 04 008 einen Rebenvorschneider, bei welchem ein an einem Trägerfahrzeug angeordnetes Tragrahmen einen Baueinheit mit mehreren übereinander angeordneten, durch Hydraulikmotoren angetriebenen Schneidsystemen trägt. Die Werkzeuge der Schneidsysteme bestehen aus sternförmigen Klingen, die von einem ebenfalls sternförmigen Schutzkorb, der als Gegenschneide wirkt, umlaufen werden. Die übereinander angeordneten Schneidklingen und Schutzkörbe sind hierbei jeweils drehstarr miteinander verbunden und die Schneidkörbe werden mittels Hydraulikzylindern in die Rebzeile ein- und aus dieser ausgeschwenkt.

Ebenso ist aus der DE 44 28 722 A1 ein Rebenvorschneider mit einem ähnlichen Schneidsystem bekannt, wobei hier keine Klingen, sondern mit hoher Drehzahl rotierende Sägeblätter als quasi im Freischnitte eingesetzte Schneidwerkzeuge Verwendung finden, der Schutzkorb aber ebenfalls angetrieben ist.

Bei anderen bekannten Ausführungen sind die Schneidwerkzeuge mit spitzen oder rund gezackten, einfachen, gegeneinander laufenden Schneidscheiben versehen, die das Rebholz abdrücken.

Nachteilig an den beschriebenen Rebenvorschneidern mit Schutzkörben ist, dass, bedingt durch die Bauform der Schutzkörbe, die Schneiden der Schneidwerkzeuge nicht nahe genug an die Drähte der Rebzeile geführt werden können, um die Ranken abzuschneiden. Daher bleiben viele kleine Holzstücke an den die Rebstöcke erziehenden Drähten hängen. Häufig werden die Stahldrähte der Rebzeile bei der Bearbeitung mit einem Schneidsystem mit Schutzkorb auch zickzackförmig verbogen. Dies ist auf den Druck zurückzuführen, den das noch nicht geschnittene Holz auf die Drähte ausübt, die gegen den äußeren, geraden Teil von zwei benachbarten Zähnen der sich drehenden Schutzkörbe gedrückt werden. Dies wiederum führt zu einer reduzierten Lebensdauer der Stahldrähte. Überdies haben Schneidsysteme mit Schutzkörben auch Schwierigkeiten, bei Rebsorten mit üppigwüchsigem, dichtem Rebholz den Rebstock mit ihren Schneidorganen völlig zu umfassen. Der von den Schneidorganen aufeinander auszuübende Druck muss sehr hoch sein, die Zweige gelangen hierdurch oft nicht bis zum Boden des Schneidorgans und werden folglich entweder gar nicht oder nur unvollständig geschnitten.

Weiter ist es nachteilig, dass unter den vorstehenden Bedingungen die Leistungsfähigkeit der Antriebsmotoren der Schneidkörbe meist derart erhöht werden muss, dass die hydraulische Kapazität des Trägerfahrzeugs überschritten wird, was wiederum mit Kosten verbundene externe hydraulische Versorgungen erforderlich macht. Daneben ist die Bauform solcher Rebenvorschneider aufwendig und diese weisen ein hohes Eigengewicht auf. Die Trägerfahrzeuge benötigen daher häufig Ausgleichsgewichte, dies erhöht den Bodendruck und macht ein Arbeiten in einem Steilhang nahezu unmöglich.

Bekannte Rebenvorschneider mit gegenläufigen Schneidscheiben kommen bauartbedingt zwar näher an den oder die Drähte der Rebzeile heran, einige Ausführungen weisen allerdings einen so großen Abstand der schneidscheiben zueinander auf, dass erneut eine größere Anzahl Holzstücke teilweise erheblicher Größe beim Schnitt an den Drähten zurückbleiben. Weisen die entsprechenden Rebenvorschneider jedoch einen engeren Abstand der Schneidscheiben auf, wird der Draht sauber entrankt, es besteht jedoch die Gefahr, dass Ruten des Rebholzes beim Heranziehen unerwünscht abgerissen werden. Diese ist insbesondere beim Kordonschnitt empfindlicher Rebsorten, wie etwa Blauem Burgunder, der Fall, deren Zapfen beim Arbeiten mit Geschwindigkeiten höher als 3 km/h abreißen. Die ist auf den Umstand zurückzuführen, dass beim Kordonschnitt die Rute durch ihre sehr kurze Länge im Moment des Schnittes nicht so beweglich ist wie beim Bogenschnitt.

Aus der EP 1 825 744 A1 ist ein Rebenvorschneider bekannt, der zum Vorschneiden von Rebholz an Rebstöcken in Bogen-, Kordon- oder dergleichen Erziehung dient. Der vorbekannte Rebenvorschneider hat einen Tragrahmen, der an einem Trägerfahrzeug angeordnet ist und an seinen Enden jeweils einen verschwenkbaren Ausleger hat. An den benachbarten freien Enden der Ausleger ist jeweils eine, sich im wesentlichen parallel zur vertikalen Erstreckung der Rebstöcke drehbar angetriebene Profilwelle angeordnet, die mit einem, mit der Profilwelle drehfest verbundenen Schneidkorb mit übereinander angeordneten, scheibenartigen Schneidwerkzeugen versehen ist. Um den Abstand zwischen den, an den gegenüberliegenden Profilwellen paarweise miteinander zusammenwirkenden Schneidwerkzeugen zu verändern, weist eine der beiden Profilwellen eine Längsverstelleinrichtung auf. Jedes der Schneidwerkzeuge weist eine zentrale mehreckige Durchstecköffnung auf, welche eine der Profilwellen durchsetzt. Aufgrund der komplementären Formgebung der Profilwelle und der auf ihr befindlichen Schneidwerkzeuge sind letztere auf der Profilwelle derart drehfest und dennoch verschieblich gehalten, dass die Schneidwerkzeuge vereinzelt, zusammengeschoben und ihre Anzahl bei Bedarf auch verringert oder vergrößert werden kann. Um den gewünschten Abstand zwischen den Schneidwerkzeugen auf das gewählte Maß verändern zu können, sind zwischen den Schneidwerkzeugen Distanzringe vorgesehen. Der Austausch dieser Distanzringe ist jedoch vergleichsweise aufwendig und auch ein Einstellen der in den Schnittebenen zusammenwirkenden Schneidmesser auf einen mehr oder weniger geringen Abstand ist nicht ohne einen Austausch dieser Distanzringe möglich.

Es ist daher die Aufgabe der vorliegenden Erfindung, einen Rebenvorschneider zur Verfügung zu stellen, der die vorstehend beschriebenen Nachteile vermeidet, einfach aufgebaut, kostengünstig und einfach handhabbar ist und an verschiedene Gegebenheiten anpassbar eine gute Entrank- und Schnittleistung bietet. Der aus EP 1 825 744 A1 vorbekannte Rebenvorschneider weist auch scheibenförmige Schneidwerkzeuge auf, die jeweils als ein umfangsseitig wellenförmig konturiertes Messerrad mit ineinander übergehenden Vor- und Rücksprüngen gebildet sind. Wenigstens eines dieser paarweise einander zugeordneten Schneiderwerkzeuge weist eine, sich über den gesamten Messerrad-Umfang erstreckende und zum Umfangsrand hin zulaufende Schneide auf. Da die in EP 1 825 744 A1 verwendeten Messerräder allseits scharfkantig ausgebildet sind, besteht die Gefahr, dass ein Draht zwischen den Vorsprüngen der miteinander zusammenwirkenden Messerräder unbeabsichtigt derart eingespannt wird, dass die Messerräder den in die Schnittebene gedrängten Draht aufschneiden. Dabei können die in horizontaler Ebene orientierten Drähte in die durch die zusammenwirkenden Schneidwerkzeuge oder Schneidmesser gebildete Schnittebene gelangen und dort unbeabsichtigt abgetrennt werden. Da die in EP 1 825 744 A1 verwendeten Messerräder an ihren Vorsprüngen und an ihren Vertiefungen scharfkantig ausgebildet sind, lassen diese ein unerwünschtes Aufschneiden der Drähte erwarten.

Ein Erfindungsvorschlag von eigener schutzwürdiger Bedeutung sieht bei einem Rebenvorschneider der eingangs erwähnten Art, bei dem zumindest eines der scheibenförmigen Schneidwerkzeuge durch ein umfangsseitig wellenförmig konturiertes Messerrad mit ineinander übergehenden Vor- und Rücksprüngen gebildet ist, daher vor, dass die Vorsprünge des Messerrads zur Oberfläche des Messerrads abgerundet und seine Rücksprünge geschliffen sind und/oder dass die Schneide der Rücksprünge am nähesten Punkt zur Achse des Messerrads hin abgerundet und kantenlos ist.

Die beim Schnittvorgang rotierenden Schneidwerkzeuge verfügen damit in ihrem äußeren, dem Rebstock zugewandten Bereich demnach über ungeschliffene Rundungen, wodurch Verletzungen an Drähten und Pfählen vermieden werden. Zusätzlich oder stattdessen kann vorgesehen sein, dass bei den Schneidwerkzeugen der Schliff der Rücksprünge zur Fläche des Messerrades hin abgerundet und kantenlos ausgebildet ist, damit diese Schneidwerkzeuge besonders eng an den Drähten'der Rebstöcke rotieren können, ohne dass die Drähte verletzt oder durchtrennt werden.

Ein häufig erforderliches Nachschleifen der geschliffenen Bereiche des Messerrades kann durch Auswahl eines verschleißfesten Materials vermieden werden.

Eine gewichtsoptimierte Weiterbildung des Rebenvorschneiders wird dadurch erreicht, dass das Messerrad speichenförmig ausgebildet ist, also kein Vollrad bildet, wobei hier die notwendige Stabilität wiederum durch Auswahl eines geeigneten Materials für das Messerrad erreicht werden kann.

Um bei einer bevorzugten Weiterbildung des Rebenvorschneiders mit einem oder mehreren Schneidwerkzeugen in bestimmten Bereichen des Rebstocks ein optimiertes schnittergebnis zu erreichen, kann es vorgesehen sein, die betreffenden Schneidwerkzeuge mit einer von den anderen Schneidwerkzeugen verschiedenen, insbesondere höheren Geschwindigkeit rotieren zu lassen. Die Voraussetzungen hierfür stellt eine Ausbildung des erfindungsgemäßen Rebenvorschneiders zur Verfügung, bei welcher die Profilwelle als Hohlwelle ausgebildet ist, in welcher eine zweite, die Hohlwelle durchgreifende Welle rotierbar gelagert ist.

Besonders bevorzugt ist dabei eine Ausführungsform, bei der im Bereich des Antriebsmittels des jeweiligen Auslegers eine Getriebeeinrichtung angeordnet ist, welche ein gemeinsames Antreiben der beiden Wellen in unterschiedlichen Geschwindigkeiten, insbesondere bei höherer Geschwindigkeit der zweiten Welle, gestattet, wobei hierfür die Getriebeeinrichtung durch entsprechende Zahnriementriebe mit Zahnrädern und zugeordneten Zahnriemen gebildet sein kann. Der gewünschte saubere Schnitt beispielsweise an einem Zapfen des Rebstocks kann dadurch erreicht werden, dass an dem freien Ende der zweiten Welle ein weiteres Schneidwerkzeug anordenbar ist, dessen Abstand zu den weiteren Schneidwerkzeugen einstellbar ist. Zur weiteren Verbesserung eines schonenden Schnittergebnisses kann gegebenenfalls bei dieser Ausführung des Rebenvorschneiders das weitere Schneidwerkzeug noch mit einem Schutzkorb versehen sein.

Für kürzere Bögen bei Bogenerziehung oder bei Kordonerziehung der Rebstöcke kann es bei dem erfindungsgemäßen Rebenvorschneider also vorgesehen sein, dass verschiedene Arten von Schneidwerkzeugen zum Einsatz kommen, die auf den Schnittbereich abgestimmt sind. Diese können, wie bereits beschrieben, im oberen Bereich des Rebstocks mit den speziell geschliffenen Schneidscheiden ausgestattet sein, die im Bereich der Drähte einen kleinen, einstellbaren Abstand zueinander aufweisen. Diese Schneidscheiben sind auf einer Hohlwelle angeordnet, in der sich eine weitere rotierende Welle dreht, wobei der Antrieb jeder Auslegeseite durch lediglich einen beispielsweise hydraulischen Antrieb erfolgt. Durch Zahnriementriebe als Getriebeeinrichtung wird dann erreicht, dass der obere Bereich dieses Schnittsystems sich gerade so schnell dreht, dass das Rebholz zerkleinert und der Draht sauber entrankt wird. Demgegenüber kommt im unteren Bereich des Rebstocks, nahe am Zapfen eine schneller rotierende, gegebenenfalls anders geschliffene, auf der zweiten Welle befestigte Schneidscheibe zum Einsatz, die aufgrund der Übersetzung des Riementriebs eine höhere Drehzahl aufweist. Diese Schneidscheiden sind von einem Schutzkorb umgeben, wodurch eine Durchtrennung der Drähte verhindert wird und gleichzeitig am Zapfen der gewünschte saubere, exakte Schnitt entsteht.

Aus der vorangegangenen Beschreibung ersichtlich sind auch die Erweiterungsmöglichkeiten dieses Rebenvorschneiders, die dem Benutzer eine Anpassung an die Gegebenheiten seines Weinbergs bzw. die Anforderungen seines Betriebs gestattet. Hierbei ist nicht zuletzt zu erwähnen, dass das geringe Eigengewicht der erfindungsgemäßen Lösung zusammen mit dem geringen Bedarf an hydraulischer Flüssigkeit und die einfache Bauweise den Anbau des Rebenvorschneiders auch an kleine Trägerfahrzeuge sowie seinen Einsatz auch in Steillagen ermöglichen. Während des Betriebs macht sich der Entfall aufwendiger Montage/Demontage zum Nachschleifen der Schneidwerkzeuge positiv bemerkbar.

Die Erfindung wird nachstehend anhand von Ausführungsbeispielen in der Zeichnung näher erläutert. Es zeigen dabei, teilweise in stark schematisierter, nicht maßstabsgetreuer Darstellung die
- Fig.1: eine Seitenansicht einer ersten Ausführungsform eines an einem Trägerfahrzeug angeordneten Rebenvorschneiders mit Tragrahmen und an dessen Auslegern befindlichen Schneidkörben;
- Fig.2: eine stirnseitige Ansicht einer genaueren Darstellung des Tragrahmens mit Schneidkörben aus der Fig. 1;
- Fig.3: eine Seitenansicht auf den Tragrahmen der Fig. 2;
- Fig.4: eine Draufsicht von oben auf den Tragrahmen der Fig. 2 und 3;
- Fig.5: eine Draufsicht auf ein Messerrad eines Schneidwerkzeugs des Rebenvorschneiders;
- Fig.6: eine Detailansicht eines Ausschnitts eines Messerrads; und die
- Fig.7: eine Seitensicht eines Trägerrahmens einer weiteren Ausführungsform des Rebenvorschneiders mit zwei an einem Ausleger angeordneten angetriebenen Wellen, an diesen angeordneten Schneidwerkzeugen sowie der Getriebeeinrichtung.

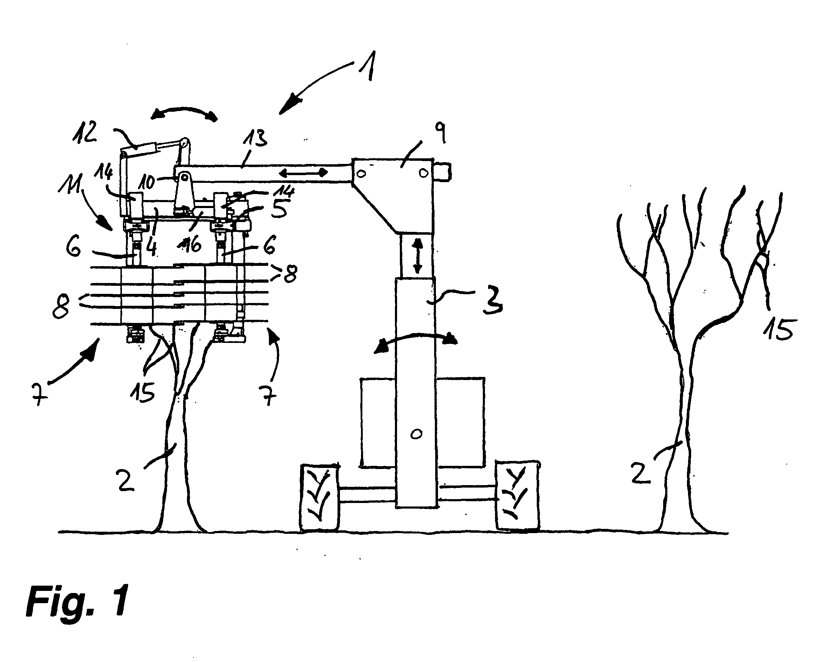

In der Fig.1 ist ein im Ganzen mit 1 bezeichneter Rebenvorschneider zum Vorschnitt von Rebholz an Rebstöcken 2 zu erkennen, mit einem lösbaren, an einem sich in Betrachtungsrichtung entlang einer Rebzeile bewegenden Trägerfahrzeug 3 angeordneten Tragrahmen 4, der an seinen Enden jeweils einen verschwenkbaren Ausleger 5 aufweist, wobei an den benachbarten freien Enden der Ausleger 5 jeweils eine sich im wesentlichen parallel zur vertikalen Erstreckung der Rebstöcke 2 drehbar angetriebenen Profilwelle 6 angeordnet ist, welche mit einem mit der Profilwelle drehfest verbundenen Schneidkorb 7 mit übereinander angeordneten, scheibenartigen Schneidwerkzeugen 8 versehen ist. An dem Rebenvorschneider 1 ist die Anzahl der an den Schneidkörben 7 befindlichen Schneidwerkzeuge 8 durch einen Benutzer manipulierbar und der Abstand der Schneidwerkzeuge 8 untereinander mittels einer Verstelleinrichtung 11 veränderbar. Der Tragrahmen 4 ist über einen Lagerpunkt 10 mit einem Hubgerüst 9 mit galgenförmigem, sich quer zur Fortbewegungsrichtung des Trägerfahrzeugs 3 erstreckendem Ausleger 13 verbunden und an diesem pendelnd gelagert, so dass er mit den durch die Doppelpfeile in der Figur angedeuteten Bewegungsmöglichkeiten in der Lage ist, die Schneidkörbe 7 mit den Schneidwerkzeugen 8 durch Höhen-, Seiten- oder kippende Verstellung von Stellmitteln des Hubgerüsts in die gewünschte Position bezüglich des jeweiligen Rebstocks 2 zu bringen. Im Bereich des Lagerpunktes 10 ist der Tragrahmen 4 außerdem mittels eines Dämpfungselements 12 mit dem Hubgerüst 9 verbunden, welcher die Pendelbewegung des Tragrahmens 4 an dem Hubgerüst 9 dämpft. Außerdem sind an dem Rebenvorschneider der Fig.1 die an den Profilwellen 6 der jeweiligen Ausleger 5 angeordneten hydraulischen Antriebsmittel 14 in Form von Hydraulikzylindern gut zu erkennen. Die Schneidkörbe 7 des Rebenvorschneiders 1 befinden sich in einer an dem Rebstock 2 eingeschwenkten Gebrauchsstellung und sind in dieser mittels ihrer als scheibenförmige Schneidscheiben ausgebildeten Schneidwerkzeuge 8 in der Lage, den gewünschten Vorschnitt der Ruten 15 der Rebstöcke 2 durchzuführen.

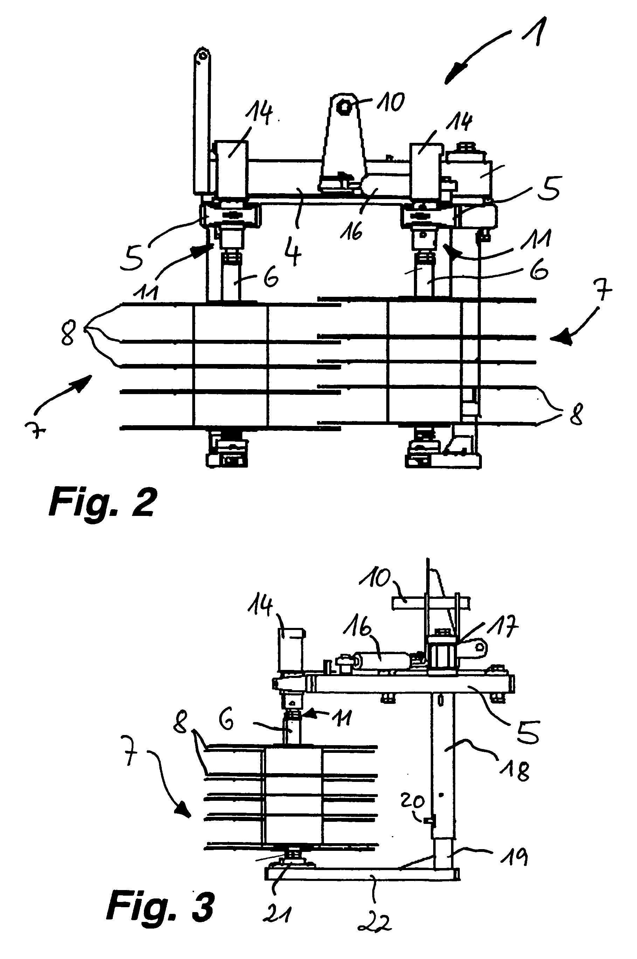

Der betreffende Rebenvorschneider 1 ist in größerem Detail in der Fig.2 dargestellt. Erneut erkennt man die Aufhängung des Tragrahmens 4 an dem nicht dargestellten Hubgerüst 9 über einen Lagerpunkt 10, wobei hier auf die Darstellung der Verbindung über das Dämpfungselement 12 verzichtet wurde. Von dem Tragrahmen 4 erstrecken sich auf einander und auf den Betrachter hin zulaufend die Ausleger 5 des Rebenvorschneiders 1, an deren freien, dem Betrachter zugewandten Enden in etwa vertikal die angetriebenen Profilwellen 6 angeordnet sind. Zwischen Lagerpunkten der Profilwelle 6 sind an Schneidkörben 7 fünf unterschiedlich beabstandete, scheibenförmige Schneidwerkzeuge 8 derart drehfest mit der Profilwelle 6 angeordnet, dass sie mit der Welle 6 rotieren. Die Profilwelle 6 ist durch hydraulische Antriebsmittel 14 angetrieben, welche sich an dem dem Tragrahmen 4 zugewandten Ende der Profilwelle 6 befindet. Im Bereich der Schneidkörbe 7 ist außerdem eine Verstelleinrichtung 11 vorgesehen, mittels derer der Abstand der Schneidwerkzeuge 8 untereinander verändert werden kann. Im dargestellten Beispiel sind die fünf Schneidwerkzeuge 8 so gruppiert, dass nach einem oberen Schneidwerkzeug 7 zunächst ein größerer Abstand zum nächst unteren Schneidwerkzeug 7 gelassen ist, dann drei relativ eng beabstandete Schneidwerkzeuge 7 folgen und zum letzten, untersten Schneidwerkzeug 7 wieder ein größerer Abstand gelassen ist. Die Gruppe der eng beabstandeten Schneidwerkzeuge ist hier zur Bearbeitung der Ruten 15 im Bereich der die Rebstöcke 2 haltenden Drähte vorgesehen. Schließlich ist in der Fig.2 außerdem zu erkennen, dass zwischen dem für den Betrachter rechten Ausleger 5 und etwa der Mitte des Tragrahmens 4 ein die Schwenkbewegung der Schneidkörbe 8 antreibendes hydraulisches Antriebsmittel 16 angeordnet ist.

Die Fig.3 zeigt den Rebenvorschneider der Fig.2 in einer Seitenansicht des in der Fig.2 für den Betrachter rechten Auslegers 5. In der Darstellung erkannt man, dass der Lagerpunkt 10 des Tragrahmens 4 durch einen Bolzen gebildet werden kann, an welchem der Tragrahmen 4 pendelnd aufgehängt ist. Weiter ist die Anordnung des hydraulischen Antriebsmittels 16 besser erkennbar sowie die Zuordnung von hydraulischen Antriebsmitteln 14, 17 zur Profilwelle 6 bzw. dem Ausleger 5, wobei letzteres Antriebsmittel 17 als Stellmittel für die Höhenverstellung des schwenkbaren, teleskopierbar höhenverstellbaren Gestells 18 des Auslegers 5 dient. Das untere Gestellteil 19 des Gestells 18 ist hierbei mittels des Riegels 20 entriegelbar und in Richtung auf den Boden hin bewegbar, nachdem das freie Ende der Profilwelle 6 an dem mit dem Gestellteil 19 durch die Strebe 22 verbundenen Lagerpunkt 21 freigegeben wurde. Hierdurch kann der Benutzer weitere scheibenartige Schneidwerkzeuge 8 zu dem Schneidkorb 7 hinzufügen oder auch entfernen und über die Verstelleinrichtung 11 deren Abstand zueinander einstellen.

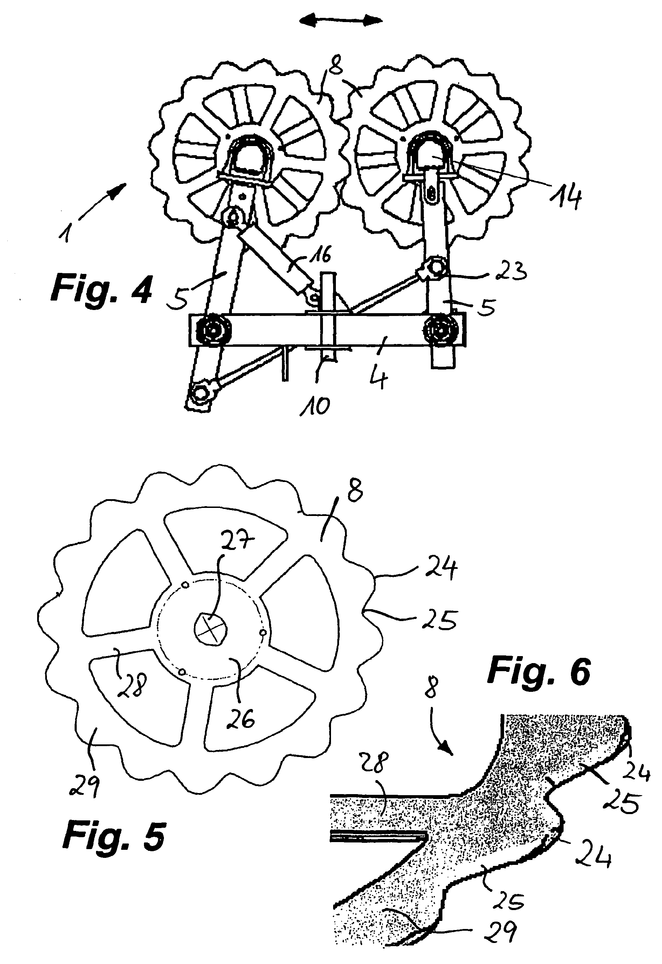

Die Fig.4 zeigt eine Draufsicht von oben auf den Rebenvorschneider 1 mit seinem Tragrahmen 4, der wiederum an dem durch einen Bolzen gebildeten Lagerpunkt 10 pendelnd gelagert ist. Von dem Tragrahen 4 stehen in etwa senkrecht, jedoch leicht einander zugeneigt die Ausleger 4 ab, die durch den diagonal zwischen den Auslegern verlaufenden Querlenker 23 miteinander verbunden sind. Im Bereich des Lagerpunktes 10 ist der Tragrahmen 4 über das hydraulische Antriebsmittel 16 in Art eines Hubzylinders mit dem für den Betrachter linken Ausleger 5 verbunden und die beiden Ausleger 5 hierdurch in Richtung des Doppelpfeils angetrieben. Gut zu erkennen ist in dieser Darstellung ebenfalls, dass die scheibenförmigen, durch die Antriebsmittel 14 angetriebenen Schneidwerkzeuge 8 des Rebenvorschneiders 1 als wellenförmige Messerräder mit Vor- und Rücksprüngen ausgebildet sind, deren einander zugewandte Ränder sich in Gebrauchsstellung übergreifen.

In der Fig. 5 erkennt man eine Ausführung des Schneidwerkzeugs 8 als fünfspeichiges, wellenförmiges Messerrad mit Vorsprüngen 24 und Rücksprüngen 25. Das Messerrad weist in seinem Zentrum eine Scheibe 26 mit einer Aufnahme 27 sich ändernden bogenförmigen Querschnitts auf, in welcher die nicht dargestellte Profilwelle 6 aufgenommen wird. Von der Scheibe 26 erstrecken sich fünf gleichmäßig beabstandete, ebene Streben als Speichen 28 zum mit den Vorsprüngen 24 und Rücksprüngen 25 versehenen Rand 29 des Schneidwerkzeugs 8.

Die Fig.6 zeigt einen Ausschnitt des Randes 29 des Schneidwerkzeugs 8 mit den Vorsprüngen 24 und Rücksprüngen 25. Gut zu erkennen und durch Schraffur verdeutlicht sind die nach außen weisenden Vorsprünge 24 zur Fläche des Randes 29 hin abgerundet und kantenlos ausgebildet, während die helleren Rücksprünge geschliffen sind, so dass diese Schneidwerkzeuge 8 gut beim Vorschnitt an Drähten einsetzbar sind, weil sie einerseits gut schneiden und entranken, andererseits Pfähle und Drähte abweisen bzw. nicht verletzen oder durchtrennen.

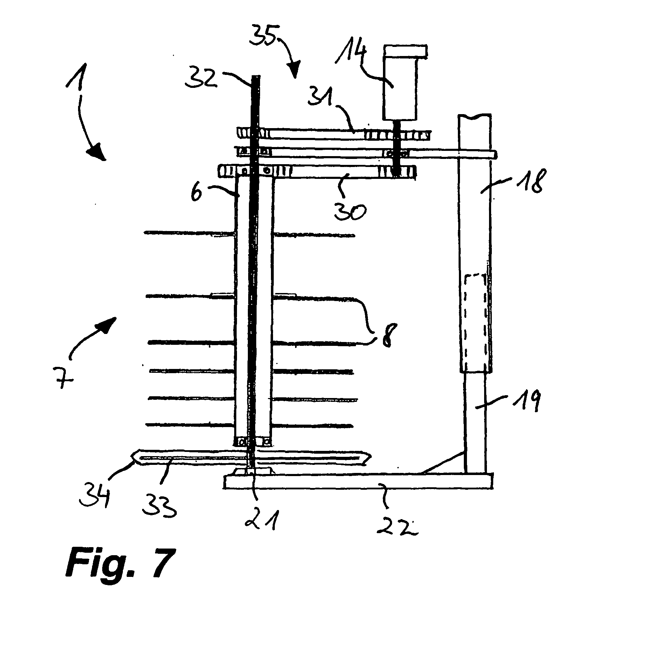

Die Ansicht der Fig.7 zeigt eine der Fig.3 ähnliche Darstellung einer weiteren Ausführungsform einer Auslegerseite des Rebenvorschneiders 1, wobei hier wesentliche Teile des Tragrahmens 4 sowie von dessen Lagerung der besseren Übersichtlichkeit nicht dargestellt sind. Zu erkennen ist aber das an dem nicht gezeigten Ausleger 5 angeordnete Gestell 18 mit dem teleskopierbaren unteren Gestellteil 19. Ebenfalls an dem Ausleger angeordnet sind ein hydraulisches Antriebsmittel 14, welches eine Profilwelle 6, die den Schneidkorb 7 mit den Schneidwerkzeugen 8 trägt, antreibt. Die Profilwelle 6 ist in diesem Fall nicht axial sondern über eine Getriebeeinrichtung 35 mit einem ersten zwischen Antriebsmittel 14 und Profilwelle 6 angeordneten Zahnriementrieb 30 angetrieben. Die Profilwelle 6 ist als Hohlwelle ausgebildet und von einer zweiten Welle 32 durchgriffen, die ebenfalls von dem Antriebsmittel 14 über einen zweiten, der Getriebeeinrichtung 35 zugeordneten Zahnriementrieb 31 angetrieben ist. Durch die unterschiedlichen Übersetzungen der Zahnriementriebe 30, 31 können die beiden Wellen 6, 32 mit unterschiedlichen Geschwindigkeiten mit dem gleichen Antriebsmittel 14 betrieben werden, wobei sich im vorliegenden Fall die zweite Welle 32 schneller als die Profilwelle 6 dreht. Denn an dem dem Boden zugewandten Ende der zweiten Welle 32, deren unteres Ende aus dem Profilwelle 6 herausragt, ist ein weiteres rotierendes, bei Bedarf anordenbares, scheibenförmiges Schneidwerkzeug 33 vorgesehen. Dieses ist mit einem Schutzkorb 34 versehen, der das als Messerrad ausgebildete Schneidwerkzeug einfasst. Dieses schneller als die wiederum unterschiedlich zueinander beabstandeten Schneidwerkzeuge 8 des Schneidkorbs 7 rotierende Schneidwerkzeug 33 wird für einen sauberen, exakten Schnitt an den Zapfen des Rebstocks 2 eingesetzt. Das untere Ende der zweiten Welle 32 ist wiederum an einem an der Strebe 22 befindlichen Lagerpunkt 21 aufgelagert. Über die Länge der zweiten Welle 32 und das teleskopierbare untere Gestellteil 19 des Gestells 18 ist die Position des Schneidwerkzeugs 33 einfach und exakt einstellbar, ebeso können weitere Schneidwerkzeuge 33 an der zweiten Welle 32 angeordnet werden.

Demnach betrifft die vorstehend beschriebene Erfindung also einen Rebenvorschneider 1 zum Vorschnitt von Rebholz an Rebstöcken 2 in Bogen-, Kordon- oder dergleichen Erziehung, mit einem lösbaren, an einem Trägerfahrzeug 3 angeordneten Tragrahmen 4, der an seinen Enden jeweils einen verschwenkbaren Ausleger 5 aufweist, wobei an den benachbarten freien Enden der Ausleger 5 jeweils eine sich im wesentlichen parallel zur vertikalen Erstreckung der Rebstöcke 2 drehbar angetriebenen Profilwelle 6 angeordnet ist, welche mit einem mit der Profilwelle 6 drehfest verbundenen Schneidkorb 7 mit übereinander angeordneten, scheibenartigen Schneidwerkzeugen 8 versehen ist. Als einfach aufgebauter, kostengünstiger und einfach handhabbarer Rebenvorschneider 1, der an verschiedene Gegebenheiten anpassbar eine gute Entrank- und Schnittleistung bietet, zeichnet dieser sich dadurch aus, dass die Anzahl der an den Schneidkörben 7 befindlichen Schneidwerkzeuge 8 durch einen Benutzer manipulierbar ist und der Abstand der Schneidwerkzeuge 8 untereinander mittels einer Verstelleinrichtung 11 veränderbar ist.

## Patentansprüche

1. Rebenvorschneider (1) zum Vorschnitt von Rebholz an Rebstöcken (2) in Bogen-, Kordon- oder dergleichen Erziehung, mit einem, an einem Trägerfahrzeug (3) angeordneten Tragrahmen 84), der an seinen Enden jeweils einen verschwenkbaren Ausleger (5) aufweist, wobei an den benachbarten freien Enden der Ausleger (5) jeweils eine, sich im wesentlichen parallel zur vertikalen Erstreckung der Rebstöcke (2) drehbar angetriebene Profilwelle (6) angeordnet ist, welche mit einem mit der Profilwelle (6) drehfest verbundenen Schneidkorb (7) mit übereinander angeordneten, scheibenartigen Schneidwerkzeugen (8) versehen ist, wobei die Anzahl der an den Schneidkörben (7) befindlichen Schneidwerkzeuge (8) durch einen Benutzer manipulierbar ist und der Abstand der Schneidwerkzeuge (8) untereinandes Mittels einer Verstelleinrichtung (11) veranderbar ist, wobei zumindest eines der scheibenförmigen Schneidwerkzeuge (8) durch ein umfangsseitig wellenförmig konturiertes Messerrad mit ineinander übergehenden Vor- und Rücksprüngen (24, 25) gebildet ist, **dadurch gekennzeichnet, dass** die Vorsprünge (24) des zumindest einen Messerrads zur Oberfläche des Messerrads abgerundet und seine Rücksprünge geschliffen sind und/oder dass die Schneide der Rücksprünge (25) am nähesten Punkt zur Achse des zumindest einen Messerrads hin abgerundet und kantenlos ist.

2. Rebenvorschneider nach Anspruch 1, **dadurch gekennzeichnet, dass** das Messerrad speichenförmig ausgebildet ist.

3. Rebenvorschneider nach Anspruch 1 oder 2, **dadurch gekennzeichnet, dass** die Profilwelle (6) als Hohlwelle ausgebildet ist, in welcher eine zweite, die Hohlwelle durchgreifende Welle (32) rotierbar gelagert ist.

4. Rebenvorschneider nach Anspruch 2 oder 3, **dadurch gekennzeichnet, dass** im Bereich des Antriebsmittels (14) des jeweiligen Auslegers (5) eine Getriebeeinrichtung (35) angeordnet ist, welche ein gemeinsames Antreiben der beiden Wellen (6, 32) in unterschiedlichen Geschwindigkeiten, insbesondere bei höherer Geschwindigkeit der zweiten Welle (32), gestattet.

5. Rebenvorschneider nach einem der Ansprüche 2 bis 4, **dadurch gekennzeichnet, dass** die Getriebeeinrichtung (35) durch entsprechende Zahnriementriebe (30, 31) mit Zahnrädern und zugeordneten Zahnriemen gebildet ist.

6. Rebenvorschneider nach einem der vorhergehenden Ansprüche, **dadurch gekennzeichnet, dass** an dem freien Ende der zweiten Welle (32) ein weiteres Schneidwerkzeug (33) anordenbar ist, dessen Abstand zu den weiteren Schneidwerkzeugen (8) einstellbar ist.

7. Rebenvorschneider nach Anspruch 6, **dadurch gekennzeichnet, dass** das weitere Schneidwerkzeug (33 mit einem Schutzkorb (34)versehen ist.

## Claims

1. Vine pre-pruner (1) for pre-pruning the shoots of vines (2) of cane, cordon, or similarly trained vines, mounted on a carrier vehicle (3) with a supporting frame (4) the ends of which bear pivotally mounted booms (5), whereby at each of the mutually adjacent free ends of the booms (5) rotationally driven profile shafts (6) are arranged so that they are substantially parallel to the vertical extent of the vines (2); each profile shaft (6) is co-rotatably connected to a cutting screen (7) which carries disc-like cutting tools (8), whereby the number of cutting tools (8) on a cutting screen (7) can be altered by the user, and the distance between the cutting tools (8) can be varied by an adjusting means (11), whereby at least one of the disc-like cutting tools (8) is **characterised by** having a circumferential wave-like contoured knife wheel with a succession of protuberances and recesses (24, 25), **characterised by** having the protuberances (24) of at least one knife wheel radiused towards the surface of the knife wheel and its recesses ground and/or the cutting edge of the recesses (25) at the point nearest its axis of rotation of at least one knife wheel radiused and free of edges.

2. Vine pre-pruner according to Claim 1 wherein the knife wheel is formed with spokes.

3. Vine pre-pruner according to Claims 1 and 2 wherein the profile shaft (6) is formed as a hollow shaft so that a second shaft (32) can be rotatably supported within it.

4. Vine pre-pruner according to Claims 2 or 3 wherein a system of gears (35) is arranged in the region of the drive means (14) of each boom (5) which permits a common drive to the two shafts (6, 32) at different speeds, in particular with a higher speed for the second shaft (32).

5. Vine pre-pruner according to Claims 2 to 4 wherein the gear system (35) is formed by suitable toothed-belt drives (30, 31) with toothed pulleys and toothed belts assigned to them.

6. Vine pre-pruner according to one of the prior claims wherein an additional cutting tool (33) can be fitted to the free end of the second shaft (32) in such a way that its distance to the other cutting tools (8) is adjustable.

7. Vine pre-pruner according to Claim 6 wherein the additional cutting tool (33) is fitted with a protective screen (34).

## Revendications

1. Prétailleuse de vignes (1) pour la prétaille de bois de vigne sur des ceps de vigne (2) en taille en double arçure, taille en cordon ou un système de taille analogue, avec un cadre support (4) placé sur un véhicule support (3), qui est muni d'un bras pivotant (5) au niveau de chaque extrémité, un arbre profilé (6) entraîné en rotation étant placé sur chacune des extrémités avoisinantes libres des bras pivotants (5), de manière sensiblement parallèle à l'étendue verticale des ceps (2), qui est muni d'un panier de taille qui est relié de manière solidaire en rotation avec l'arbre profilé (6), avec des outils de coupe (8) en forme de disque posés l'un sur l'autre, le nombre d'outils de coupe (8) qui se trouve dans les paniers de coupe (7) pouvant être manipulé par un utilisateur, et l'écart des outils (8) entre eux étant modifiable au moyen d'un dispositif de réglage (11), au moins un des outils en forme de disque (8) étant formé par un couteau radial profilé présenté sous forme ondulée côté périphérie avec des parties saillantes et des parties en retrait (24, 25) se confondant les unes avec les autres, **caractérisée en ce que** les parties saillantes (24) d'au moins un couteau radial sont arrondies et les parties en retrait sont aiguisées et/ou **en ce que** la des parties en retrait (25) lame sont arrondies et sans arête vers le point les plus proche par rapport à l'axe d'au moins un couteau radial.

2. Prétailleuse de vignes selon la revendication 1, **caractérisée en ce que** le couteau radial se présente en forme de rayons.

3. Prétailleuse de vignes selon les revendications 1 et 2, **caractérisée en ce que** l'arbre profilé (6) est formé en tant qu'arbre creux dans laquelle un deuxième arbre (32) traversant l'arbre creux est monté rotatif.

4. Prétailleuse de vignes selon la revendication 2 ou 3, **caractérisée en ce qu'**un dispositif de transmission (35) est monté dans la zone du moyen d'entraînement (14) du bras pivotant (5) concerné, qui permet un entraînement commun des deux arbres (6, 32) à des vitesses différentes, en particulier si la vitesse du deuxième arbre (32) est supérieure.

5. Prétailleuse de vignes selon l'une des revendications 2 à 4, **caractérisée en ce que** le dispositif de transmission (35) est formé par des transmissions à courroie dentée (30, 31) correspondantes munies de roues dentées et de courroies dentées associées.

6. Prétailleuse de vignes selon une des revendications précédentes, **caractérisée en ce qu'**un outil de coupe (33) supplémentaire peut être monté sur l'extrémité libre du deuxième arbre (32), dont l'écart par rapport aux outils de coupe (8) supplémentaires peut être réglé.

7. Prétailleuse de vignes selon la revendication 6, **caractérisée en ce qu'**un outil de coupe (33) supplémentaire est muni d'un panier de protection (34).
